# EUROPEAN PATENT APPLICATION

(11) **EP 3 984 634 A2**
(43) Date of publication of application: **20.04.2022**
(21) Application number: 20827671.7
(22) Date of filing: 09.06.2020
(51) Int. Cl.: B01J 23/00, B01J 23/46, B01J 37/02, B01J 37/08, B01D 53/94, F01N 3/20

(54) **HEAT-RESISTANT RUTHENIUM COMPOSITE AND USE THEREOF AS CATALYST FOR NOxSTORAGE AND REDUCTION**

(30) Priority: 17.06.2019 KR 20190071653
(71) Applicant: Heesung Catalysts Corporation, Siheung-si, Gyeonggi-do 15088 (KR)
(72) Inventor: KOMATEEDI, Narayana Rao, Ansan-si Gyeonggi-do 15219 (KR); LIM, Seung-soo, Siheung-si Gyeonggi-do 15019 (KR); KIM, Eun-seok, Ansan-si Gyeonggi-do 15500 (KR)
(74) Representative: Latscha Schöllhorn Partner AG
(86) International application number: PCT/KR2020/007432
(87) International publication number: WO 2020/256327

(57) **Abstract**

The present invention relates to a heat-resistant ruthenium composite and, more particularly, to a heat-resistant ruthenium composite, a catalyst using same, and an exhaust system, the heat-resistant ruthenium composite being composed of a matrix including a plurality of cores therein, wherein ruthenium is present in a metal state in the core and a Ru complex oxide including Ru perovskite (PV) is contained in the matrix.

## Description

### Technical Field

The present disclosure relates a heat-resistant ruthenium composite and, more specifically, to a heat-resistant ruthenium composite, a catalyst using same, and an exhaust system, the heat-resistant ruthenium composite being composed of a matrix including a plurality of cores therein in which ruthenium is present in a metal state in the core and a Ru complex oxide including Ru perovskite (PV) is contained in the matrix.

### Background Art

Ruthenium (Ru) is a platinum group element and is known to have high activity in various catalytic reactions, and in particular, catalytic activity in De-NOx reactions. However, since RuO₄ is volatilized in a high-temperature oxidation atmosphere of 700°C or higher, there is no high-temperature stability, so there is a problem in applying it as a catalyst. Specifically, the melting point of Ru metal is 2,300°C, and the boiling point is 4,100°C, which is extremely stable in a metallic state, but the boiling point of RuO₂ is 1,200°C, and in particular, since the boiling point of RuO₄ is 100°C or less, it is necessary to have high temperature durability by maintaining Ru in a metallic state in order to utilize the catalytic characteristics of Ru. Ru PV (perovskite) has been reported as a structure to solve this Ru volatility problem.

The stabilized iridium and ruthenium catalyst of WO2009/129356 (BASF) provides a non-single-phase perovskite-type bulk material rich in at least one or more Ru and Ir in the surface region and a method for treating exhaust gases using the same. Specifically, the bulk material is prepared using a Ru-containing aqueous solution, such as an aqueous solution of ruthenium nitrosyl nitrate, as a non-single-phase material composed of a PV structure material therein and an AMO3 + PV structure material in the surface region, and the bulk materials do not exhibit Ru or Ir volatility at high temperatures above 800°C. Meanwhile, according to U.S. Patent No. 4,182,694 (Ru-containing perovskite catalyst), a catalyst composition having the chemical formula A[RuₓB_{y}¹B_{z}²]O₃ and a PV crystal structure is disclosed, which is reported to be useful for gas oxidation and reduction reactions. The catalyst composition is manufactured by using ruthenium oxide as a raw material with heat treatment.

### Disclosure

### Technical Problem

However, there is still a need to develop a catalyst that shows high temperature durability using ruthenium, which is cheaper than the conventional platinum group element and has NOx adsorption or storage and reduction ability while maintaining Ru in a metallic state.

### Technical Solution

A heat-resistant ruthenium composite includes a substrate containing a plurality of cores, wherein ruthenium exists in a metal state in the core and includes a Ru composite oxide including Ru PV (perovskite) in the substrate, is provided.

### Advantageous Effects

The present disclosure generates a ruthenium composite to improve the high temperature durability of Ru. A composite using ruthenium, which is cheaper than other platinum group elements, may be applied as part of the catalyst component NSR, LNT, DOC, and TWC.

### Description of Drawings

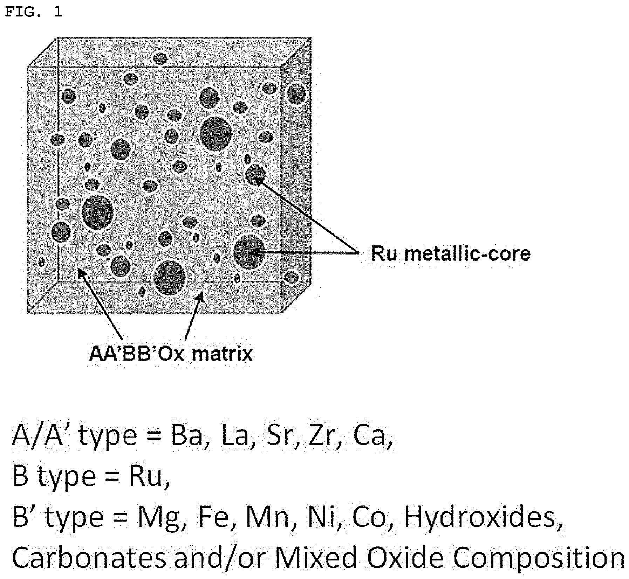

FIG. 1 schematically shows a ruthenium composite according to the present disclosure.
FIG. 2 is an XRD result for the ruthenium composite prepared in Example.
FIG. 3 shows that the NOx conversion rate was tested for the catalysts prepared in Examples. It is confirmed that the conversion rate is significantly improved in the NSR catalyst containing the ruthenium complex.
FIG. 4 shows the catalyst measurement results of Examples.
FIG. 5 is a worldwide harmonized light vehicles test cycle (WLTC) results after engine aging for the catalyst prepared in Example.
FIG. 6 is an investigation of the volatility of Ru itself in the Ru complex.

### Best Mode

Perovskite is generally a metal oxide having the chemical structure of ABO₃. Ru PV refers to ruthenium oxide having a perovskite structure of Formula ARuO₃ (Alkali metal such as A: Ba, La, Sr, Zr, Ca, etc.). Ru composite oxide including Ru PV is defined as a concept including Ru mixed oxide including formula AA'RuBOₓ [X = 2 to 15] (A, A': Alkali metals such as Ba, La, Sr, Zr, Ca, B: a transition metal such as transition metals such as Fe, Mn, Ni, Co, etc., or Mg) in addition to Ru PV. According to the present disclosure, the heat-resistant ruthenium composite includes a substrate of a Ru composite oxide, and has a structure containing a plurality of metallic ruthenium as a core in the substrate. The Ru composite oxide includes a Ru mixed oxide having an AA'RuBOx structure as well as Ru PV having an ARuO₃ structure. According to the present disclosure, it is determined that the core holds the metallic ruthenium, and the metallic ruthenium may contact the reaction gas through a plurality of pores present in the substrate and that the ruthenium may move to the surface of the substrate according to the reaction conditions, for example, lean or rich conditions.

In the present disclosure, the ruthenium composite may also be understood as a solid ruthenium solution and may also be referred to as a composition because it includes a Ru PV and a Ru mixed oxide. In the present disclosure, the core of the ruthenium composite is characterized by using a Ru-nano powder to maintain Ru in a metallic state. These ruthenium complexes can be applied as NOx storage and reduction catalysts due to their excellent NOx storage-De-NOx ability and excellent Passiveness (NOx → NH₃ conversion rate), and N₂ selectivity. In the present embodiment, N₂ selectivity means a tendency for NOx to switch to preferred N₂, not unwanted N₂O.

### Example 1: Preparation of Ruthenium Complex

Ru metal powder or nano-particle powder with a diameter of 5 nm to 5 micrometers (commercially referred to as Ru sponge) (Ru/RuOx), A type (Ba, La, Sr, Zr, Ca, etc. alkali metal) precursor, B-type (transition metal such as Fe, Mn, Ni, Co, or Mg) precursors were mixed, and ball-milled. A solid solution was prepared by heat treatment in a furnace ranging from 700°C to 1300°C. In this case, the A-type or B-type precursor may be in the form of hydroxide, carbonate, nitrate, or oxide. After heat treatment, if necessary, the surface area may be adjusted by milling.

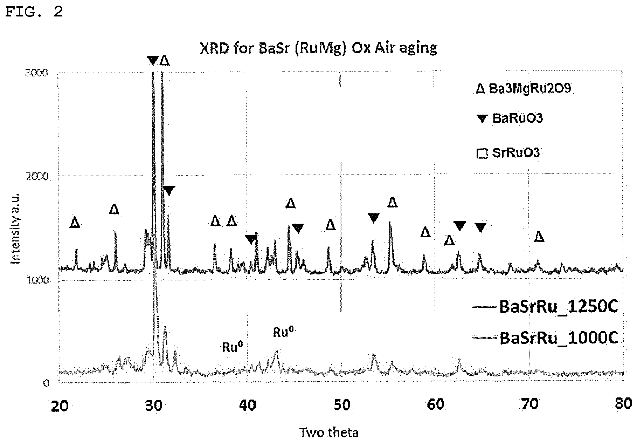

FIG. 2 is an XRD result for the ruthenium composite prepared by heat treatment at 1000°C and 1250°C in Example 1 in particular, confirming the Ru core embedded in the BaSr-RuMg-Ox substrate. It can be seen that the solid solution contains Ru PV and various Ru mixed oxides.

### Example 2: Preparation of NSR (NOx Storage and Reduction) Catalyst

After impregnating the platinum group (Pt / Pd / Rh) component on modified alumina, ceria, and zirconia, and then thermally (500°C) fixing and milling to prepare a powder, and then mixing the powder with the Ba, Sr, and MgO components, which are NOx storage components, in distilled water to complete the slurry was applied to complete the NSR comparative catalyst (referred to as reference). For Reference, a ruthenium composite (referred to as RUSS-1) prepared by heat treatment at 800°C in Example 1 was kneaded to prepare an NSR catalyst (Ref.+ RUSS-1) according to the present disclosure. A ruthenium composite (referred to as RUSS-2) prepared by heat treatment at 1100°C in Example 1 was mixed as a Reference to prepare an NSR catalyst (Ref.+ RUSS-2) according to the present disclosure. When manufacturing a system containing Ru SS-1 and Ru SS-2, the platinum group components contained in the Reference were reduced by 16% so that they could be manufactured at the same unit cost as the Reference. On the other hand, in this Example, the Reference and the powder of Example 1 were kneaded and performed, but of course, it may be implemented by applying to a substrate in a layered form.

### Example 3: Preparation of LNT (Lean NOx Trap) or NA (NOx adsorption) catalyst

The LNT catalyst was prepared in a conventional method to complete the LNT comparative catalyst. The LNT catalyst (LNT Ru SS-3), according to the present disclosure, was prepared by mixing the ruthenium complex (referred to as Ru SS-3) containing La(RuMg)Ox prepared in Example 1 into LNT. Meanwhile, an LNT+w/o Ru (BaSrMgOx) system was prepared by mixing a BaSrMgOx solid solution, which was prepared similarly to Example 1 but did not include Ru, into an LNT comparison catalyst. When manufacturing a system containing Ru SS-3, the platinum group components contained in the Reference were reduced by 16% so that it could be manufactured at the same unit cost as the Reference.

The following table summarizes the catalyst systems completed in Examples 2 to 3.

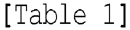

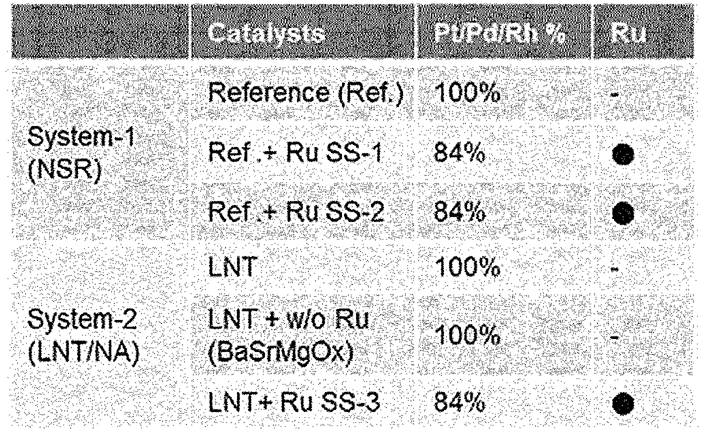

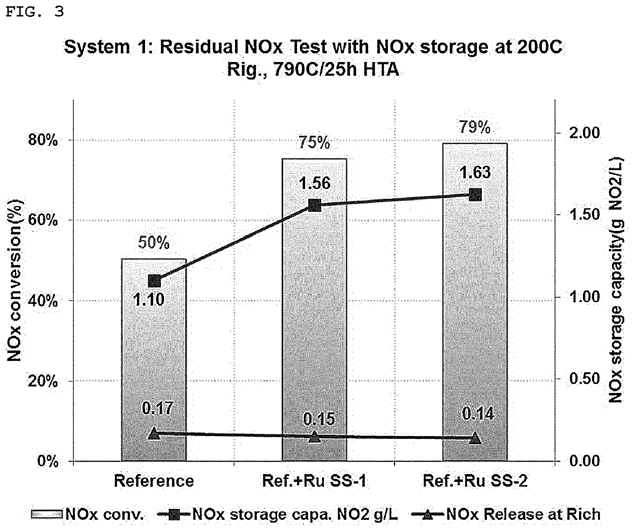

FIG. 3 shows that the NOx conversion rate was tested for the catalysts prepared in Example 2, and it is confirmed that the conversion rate is significantly improved in the NSR catalyst containing the ruthenium complex.

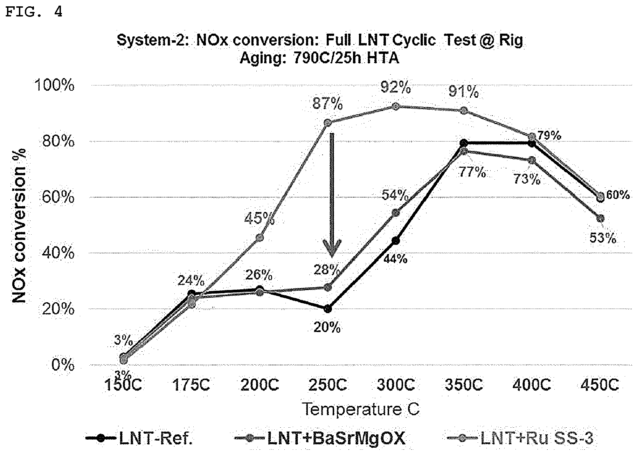

FIG. 4 shows the catalyst measurement results of Example 3, and according to the results, in the case of a solid solution not containing ruthenium, it can be confirmed that the NOx storage and reduction performance is greatly reduced.

The present disclosure shows that a ruthenium composite is provided to improve the high temperature durability of Ru, and a composite using ruthenium, which is cheaper than other platinum group elements, can be applied as a part of the catalyst component of NSR, LNT, DOC, and TWC.

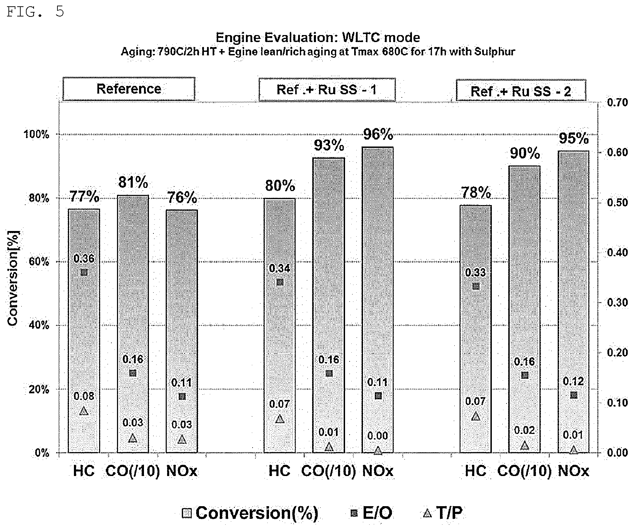

The results of performing worldwide harmonized light vehicles test cycle (WLTC) after engine aging on the catalyst prepared in Example 2 are summarized in FIG. 5.

It may be seen that the CO oxidation capability and the de-NOx capabilities of the Ru composite, according to the present disclosure, were significantly improved compared to Reference, and thus the Ru composite showed increased durability at a high temperature of engine aging.

Finally, the volatility of Ru itself in the Ru complex was investigated.

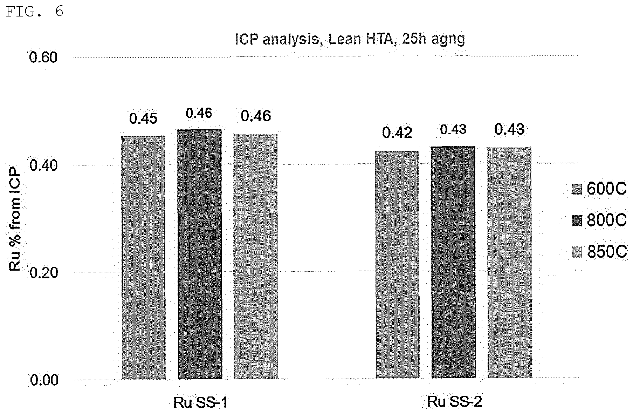

According to FIG. 6, ICP analysis results are shown after hydrothermal aging at 600 to 850°C for 25 hours for the powder prepared in Example 1, and the high temperature stability of Ru through Ru complex formation according to the present disclosure may be confirmed.

## Claims

1. A heat-resistant ruthenium composite comprising a matrix in which a plurality of cores is embedded, wherein the core contains ruthenium in a metallic state, and the matrix comprises Ru composite oxide containing Ru PV (perovskite).

2. The heat-resistant ruthenium composite of claim 1, wherein the Ru composite oxide comprises Ru PV (perovskite) having a ARuO₃ structure and a Ru mixed oxide having a AA'RuBOx structure.

3. The heat-resistant ruthenium composite of claim 2, wherein the A element is Ba, La, Sr, Zr, or Ca, and the B is Fe, Mn, Ni, Co, or Mg.

4. A catalyst comprising the heat-resistant ruthenium composite of claim 1 supported on a carrier, wherein the catalyst is used in an application of NSR or LNT.

5. An internal combustion engine exhaust system comprising the catalyst of claim 4.

6. The internal combustion engine exhaust system of claim 5, further comprising a catalyst component selected from the group consisting of optional catalyst reduction (SCR) catalysts, particulate filters, SCR filters, NOx adsorbent catalysts, ternary catalysts, oxidation catalysts, and combinations thereof.

7. A method of manufacturing a heat-resistant ruthenium composite, the method comprising: a step of mixing a precursor of an A-type alkali metal consisting of Ru metal powder or nano-particle powder (Ru/RuOx), Ba, La, Sr, Zr, and Ca, and a B-type precursor consisting of Mg, Fe, Mn, Ni, and Co; and a step of thermally treating the resulting mixture in air.

8. The method of claim 7, wherein the precursor is selected from among hydroxide, carbonate, nitrate, and metal oxides.
